# EUROPÄISCHE PATENTANMELDUNG

(11) **EP 2 441 981 A1**
(43) Veröffentlichungstag der Anmeldung: **18.04.2012**
(21) Anmeldenummer: 11181192.3
(22) Anmeldetag: 14.09.2011
(51) Int. Cl.: F16H 57/04

(54) **Getriebe, insbesondere Schiffsgetriebe**

(30) Priorität: 15.10.2010 DE 102010042480
(71) Anmelder: ZF Friedrichshafen AG, 88038 Friedrichshafen (DE)
(72) Erfinder: Woelfle, Bernd, 88074 Meckenbeuren (DE)

(57) **Zusammenfassung**

Die Erfindung betrifft ein Getriebe, insbesondere ein Kraftfahrzeuggetriebe, mit einem Gehäuse (5) und mindestens einer einen Ölzuführungskanal (6) aufweisenden Getriebewelle (1), wobei über den Ölzuführungskanal (6) eine radial zur mindestens einen Getriebewelle (1) liegende Funktionsbaugruppe mit Öl versorgbar ist, dadurch gekennzeichnet, dass im Bereich von mindestens einem Wälzlager (4, 11) eine je zugeordnete radiale Bohrung (12; 13) von dem Ölzuführungskanal (6) abzweigt, welche in einen je zugehörigen Ringkanal (14; 15) zur Zuführung von Öl zum mindestens einen Wälzlager (4; 11) einmündet.

## Beschreibung

Die Erfindung betrifft ein Getriebe, insbesondere ein Schiffsgetriebe, mit einem Gehäuse und mindestens einer einen Ölzuführungskanal aufweisenden Getriebewelle, wobei über den Ölzuführungskanal eine radial zur mindestens einen Getriebewelle liegende Funktionsbaugruppe mit Öl versorgbar ist.

Bei Schiffsgetrieben erfolgt eine Schmiermittelversorgung von Funktionsbaugruppen, wie beispielsweise Kupplungen, Übersetzungsstufen, etc., häufig über einen Ölzuführungskanal in zumindest einer der Getriebewellen. Des Weiteren werden zur Schmierung der Wälzlagerungen des Getriebes entweder entsprechende Kanalsysteme im Getriebegehäuse und Ölzuführringe oder ebenfalls Ölzuführungskanäle in mindestens einer der Getriebewellen vorgesehen.

Aus der DE 103 48 757 A1 ist ein Planetengetriebe bekannt, bei welchem eine Wälzlagerung einer Abtriebswelle über einen in einem Gehäuse ausgebildeten Ölkanal mit Schmiermittel versorgbar ist. Dabei ist das Schmiermittel über in der Abtriebswelle ausgebildeten Ölzuführungskanäle einem Axiallager der Abtriebswelle zuführbar.

Des Weiteren geht aus der DE 10 2007 024 513 A1 ein Getriebe mit einem Gehäuse hervor, bei welchem über einen Ölzuführungskanal in einer Getriebewelle mittels angrenzender radialer Bohrungen radial zur Getriebewelle liegende Funktionsbaugruppen mit Öl versorgbar sind. Bei diesen Funktionsbaugruppen handelt es sich insbesondere um eine Lamellenkupplung und eine Planetenradstufe. Die Funktionsbaugruppen sind dabei in einer Ummantelung angeordnet, in welcher sich das über den Ölzuführungskanal zugeführte Öl ansammelt und über einen parallel zur Getriebewelle verlaufenden Ölabführungskanal wieder entweichen kann.

Es ist die Aufgabe der vorliegenden Erfindung, ein vorgenanntes Getriebe dahingehend zu verbessern, dass eine Ölversorgung mindestens eines Wälzlagers des Getriebes individuell und mit möglichst geringem fertigungstechnischen Aufwand darstellbar ist.

Diese Aufgabe wird ausgehend vom Oberbegriff des Anspruchs 1 in Verbindung mit dessen kennzeichnenden Merkmalen gelöst. Die darauf folgenden, abhängigen Ansprüche geben jeweils vorteilhafte Weiterbildungen der Erfindung wieder.

Die Erfindung umfasst die technische Lehre, dass im Bereich von mindestens einem Wälzlager eine je zugeordnete radiale Bohrung von dem Ölzuführungskanal der mindestens einen Getriebewelle abzweigt, wobei diese radiale Bohrung in einen je zugehörigen Ringkanal zur Zuführung von Öl zum mindestens einen Wälzlager einmündet. Durch diesen Aufbau kann eine Ölversorgung einer Wälzlagerung des Getriebes über einen bereits vorhandenen Ölzuführungskanal einer Funktionsbaugruppe erfolgen. Dabei lässt sich diese Ölzuführung durch die radiale Bohrung im Bereich des jeweiligen Wälzlagers und den daran anschließenden zugehörigen Ringkanal mit niedrigem Herstellungsaufwand realisieren. Zudem kann eine individuelle Ölversorgung des jeweiligen Wälzlagers durch die je zugeordnete radiale Bohrung erfolgen, so dass die zugeführte Schmiermittelmenge entsprechend der Gestaltung der radialen Bohrung und des Ringkanals auf das jeweilige Wälzlager gezielt abgestimmt werden kann.

Im Unterschied hierzu erfolgt bei der DE 103 48 757 A1 eine Schmiermittelversorgung der Abtriebswellenlagerung über Ölleitungen im Getriebegehäuse, welche sich fertigungstechnisch nur sehr aufwändig gestalten lassen. Eine Versorgung des Axiallagers erfolgt zwar über Ölzuführungskanäle in der Abtriebswelle, hierbei handelt es sich allerdings um das von der radialen Lagerung der Abtriebswelle kommende Öl, so dass eine individuelle Versorgung der Axiallagerung nicht möglich ist. Zudem müssen diese Ölzuführungskanäle zusätzlich in der Abtriebswelle vorgesehen werden.

Bei der DE 10 2007 024 513 A1 erfolgt zwar eine Ölzuführung über einen Kanal in einer der Getriebewellen, eine individuelle Schmiermittelversorgung einer Wälzlagerung ist hierbei aber nicht vorgesehen.

In Weiterbildung der Erfindung lagert das mindestens eine Wälzlager die mindestens eine Getriebewelle, wobei der je zugehörige Ringkanal axial benachbart zu dem mindestens einen Wälzlager in einer Nabe oder im Gehäuse ausgebildet und über einen Kanal mit dem mindestens einen Wälzlager verbunden ist. Mittels einer derartigen Ausgestaltung sind die radiale Bohrung und der daran anschließende Ringkanal sehr dicht bei dem zugehörigen Wälzlager platziert, so dass insbesondere der daran anschließende Kanal sehr kurz gehalten werden kann. Zudem kann die Ölzuführung in bereits bestehenden Bauteilen mit niedrigem Herstellungsaufwand realisiert werden.

Entsprechend einer weiteren Ausgestaltung der Erfindung lagert das mindestens eine Wälzlager eine Nabe, wobei der je zugehörige Ringkanal radial zwischen dem mindestens einen Wälzlager und der mindestens einen Getriebewelle liegend ausgebildet und über ein anschließendes Kanalsystem mit dem mindestens einen Wälzlager verbunden ist. Bevorzugt ist der Ringkanal hierbei in der Nabe ausgebildet, wobei des Weiteren bevorzugt die Nabe und das Gehäuse das Kanalsystem zumindest bereichsweise zwischen sich definieren. Hierbei ist das Kanalsystem insbesondere stufenartig ausgebildet. Dies hat den Vorteil, dass eine erfindungsgemäße, individuelle Ölversorgung einer Nabenlagerung mit niedrigem Herstellungsaufwand möglich ist. Hierbei können bereits bestehende Bauteile, wie Gehäuse und Nabe, zur Ausbildung des Kanalsystems zur Zuführung des Öls herangezogen werden. Diese Gestaltung des Kanalsystems kann dabei durch eine entsprechende Bearbeitung des Konturverlaufs von Gehäuse und Nabe in diesem Bereich auf einfache Art und Weise realisiert werden. Durch den stufenartigen Aufbau des Kanalsystems kann das Öl optimal an die zugehörige Wälzlagerung herangeführt werden.

In Weiterbildung der Erfindung ist in der je zugeordneten radialen Bohrung eine Blende vorgesehen, welche über eine Durchgangsbohrung einen Öldurchfluss definiert. Hierdurch ist es möglich, die dem je zugehörigen Wälzlager zugeführte Ölmenge nicht durch die Bohrung, sondern durch die Blendenbohrung zu definieren, so dass bei mehreren radialen Bohrungen zunächst alle einheitlich vorgesehen werden können und eine individuelle Abstimmung dann über die jeweilige verwendete Blende erfolgt. Gleichzeitig ist dabei eine präzise und einfache Öldurchflussmengenregelung möglich.

Vorteilhafterweise handelt es sich bei der Funktionsbaugruppe um eine Lamellenkupplung. Diese Ölzuführung der Lamellenkupplung lässt sich problemlos zur Schmierung mindestens eines Wälzlagers des Getriebes nutzen.

In Weiterbildung der Erfindung sind zwei Wälzlager axial dicht beieinander angeordnet. Durch die erfindungsgemäße Ausgestaltung der jeweiligen Ölzuführungen können diese beiden Wälzlager hierbei trotzdem individuell versorgt werden.

Erfindungsgemäß ist die mindestens eine Wälzlagerung ein Zylinderrollenlager. Hierdurch kann eine robuste, radiale Lagerung einer Getriebewelle oder einer Nabe gegenüber dem Gehäuse des Getriebes dargestellt werden.

In einer vorteilhaften Ausgestaltung der Erfindung sind der Innendurchmesser der Bohrung in dem Gehäuse und der Außendurchmesser der Nabe so gewählt, dass ein radialer Dichtspalt gebildet wird.

Unter einem radialen Dichtspalt zwischen einer Welle und einer Bohrung versteht man einen Ringspalt, der von einer kreisförmigen Außenkontur der

Welle, welche durch einen Außendurchmesser bestimmt ist, und der kreisförmigen Innenkontur der Bohrung, welche durch einen Innendurchmesser bestimmt ist, gebildet wird. Die Differenz zwischen dem Außendurchmesser der Welle und dem Innendurchmesser der Bohrung ist hier bei so gewählt, dass unter Miteinbeziehung der Viskosität eines den Ringspalt durchströmenden Fluids und der axialen Erstreckung des Ringspalts der Durchflusswiderstand, d.h. die Druckdifferenz zwischen der Eintrittsseite und der Austrittsseite des Spaltes so groß ist, dass der den Dichtspalt durchströmende Volumenstrom des Fluids auf einen definierten Maximalwert begrenzt wird. Hierdurch wird eine hydraulische Dichtwirkung erzielt. In der Praxis beträgt die Höhe eines ringförmigen radialen Dichtspaltes, d.h. die Differenz zwischen Außendurchmesser der Welle und Innendurchmesser der Bohrung, 0,1 bis 0,25 % des Außendurchmessers der Welle.

Weitere, die Erfindung verbessernde Maßnahmen werden nachstehend gemeinsam mit der Beschreibung einer bevorzugten Ausführungsform der Erfindung anhand von Figuren näher dargestellt.

Es zeigt:
- Fig. 1: eine Schnittansicht eines erfindungsgemäßen Getriebes ge-mäß einer bevorzugten Ausführungsform der Erfindung im Be-reich einer Getriebewelle; und
- Fig. 2: eine detaillierte Schnittansicht im Bereich eines Wälzlagers der Getriebewelle in Fig. 1.

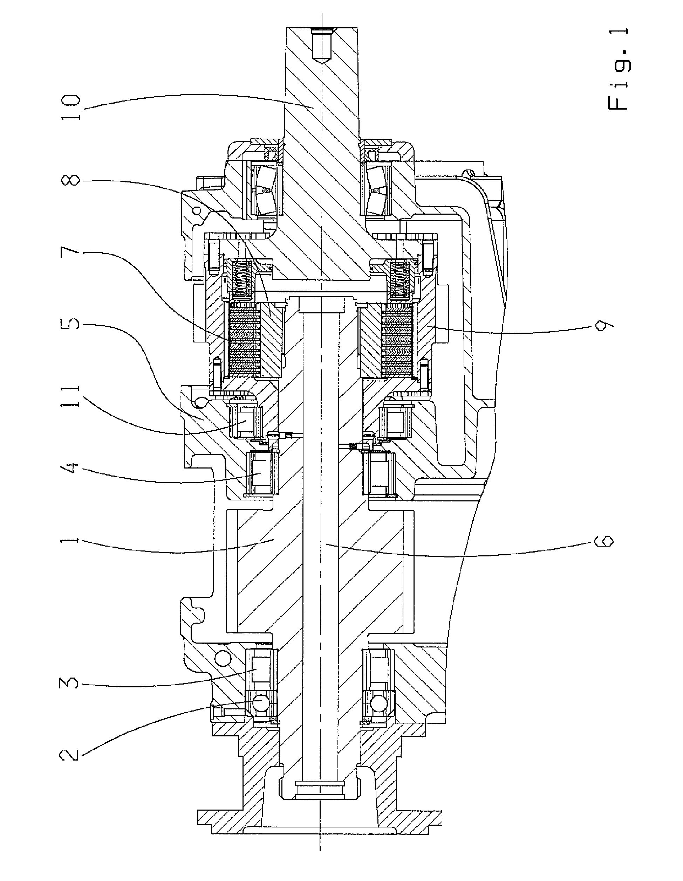

In Fig. 1 ist eine Schnittansicht eines erfindungsgemäßen Getriebes gemäß einer bevorzugten Ausführungsform im Bereich einer Getriebewelle 1 dargestellt. Diese Getriebewelle 1 ist über die Wälzlager 2, 3 und 4 in einem Gehäuse 5 drehbar gelagert, wobei das Wälzlager 2 als Kugellager und die Wälzlager 3 und 4 jeweils als Zylinderrollenlager ausgeführt sind. Des Weiteren verläuft in der Getriebewelle 1 ein Ölzuführungskanal 6 einer radial zur Getriebewelle 1 angeordneten Lamellenkupplung 7, über welchen die Lamellenkupplung 7 mit Öl versorgbar ist. Die Lamellen der Lamellenkupplung 7 sind alternierend mit einer innenliegenden Nabe 8 und einer außenliegenden Nabe 9 verbunden, wobei die innenliegende Nabe 8 drehfest auf der Getriebewelle 1 platziert ist, wohingegen die außenliegende Nabe 9 im unbetätigten Zustand der Lamellenkupplung 7 relativ zu der Getriebewelle 1 rotierbar und mit einer koaxial zu Getriebewelle 1 angeordneten Getriebewelle 10 verbunden ist. Durch Schließen der Lamellenkupplung 7 wird die Getriebewelle 1 mit der Getriebewelle 10 über die Naben 8 und 9 gekoppelt. Die Nabe 9 ist über ein Wälzlager 11 in Form eines weiteren Zylinderrollenlagers drehbar gegenüber dem Gehäuse 5 gelagert.

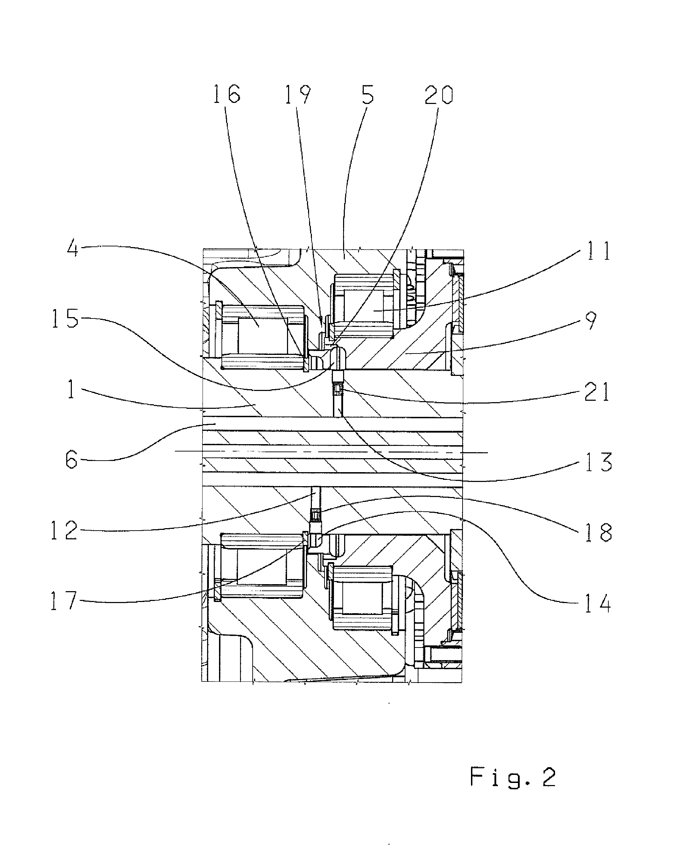

Als Besonderheit werden sowohl das Wälzlager 4 als auch das Wälzlager 11 über den Ölzuführungskanal 6 in der Getriebewelle 1 mit Öl als Schmierstoff versorgt. Der diesbezüglich erfindungsgemäße Aufbau geht aus der detaillierten Schnittansicht in Fig. 2 hervor. Wie hierbei zu erkennen ist, ist dem Wälzlager 4 eine radial vom Ölzuführungskanal 6 abzweigende radiale Bohrung 12 und dem Wälzlager 11 eine radial abzweigende radiale Bohrung 13 zugeordnet. Diese beiden radialen Bohrungen 12 und 13 münden in einen je zugehörigen Ringkanal 14 und 15.

Wie des Weiteren aus Fig. 2 ersichtlich ist, ist der Ringkanal 14 axial benachbart zu dem Wälzlager 4 in der Nabe 9 ausgebildet und über einen Kanal 16 mit dem Wälzlager 4 verbunden. Der Kanal 16 wird hierbei durch eine an den Ringkanal 14 anschließende Aufweitung, sowie eine daran anschließende Ausnehmung im Gehäuse 5 gebildet. Über die Aufweitung und die Ausnehmung kann das über die radiale Bohrung 12 zugeführte Öl an einem Sicherungsring 17 des Wälzlagers 4vorbei zu den Wälzkörpern des Wälzlagers 4 gelangen. Des Weiteren ist in der radialen Bohrung 12 eine Blende 18 vorgesehen, die- hier nur zeichnerisch angedeutet - über eine Durchgangsbohrung den Öldurchfluss über die radiale Bohrung 12 regelt. Mittels der Blende 18 kann somit die zum Wälzlager 4 gelangende Ölmenge präzise eingestellt werden.

Des Weiteren ist aus Fig. 2 ersichtlich, dass ausgehend vom Ringkanal 15 eine Zuführung des Öls über ein Kanalsystem 19 zum Wälzlager 11 erfolgt. Dieses Kanalsystem 19 setzt sich dabei aus in axialer Richtung von dem Ringkanal 15 abzweigenden Querbohrungen 20, sowie daran anschließenden Ausnehmungen am Gehäuse 5 und Nabe 9 zusammen. Hierdurch wird ein treppenartiger Verlauf des Kanalsystems 19 erreicht, wobei ein Teil dieses Kanalsystems 19 zwischen Gehäuse 5 und Nabe 9 ausgebildet ist. Der Innendurchmesser der Bohrung in dem Gehäuse 5 und der Außendurchmesser der Nabe 9 sind so gewählt, dass ein radialer Dichtspalt 22 gebildet wird.

Unter einem radialen Dichtspalt zwischen einer Welle und einer Bohrung versteht man einen Ringspalt, der von einer kreisförmigen Außenkontur der Welle, welche durch einen Außendurchmesser bestimmt ist, und der kreisförmigen Innenkontur der Bohrung, welche durch einen Innendurchmesser bestimmt ist, gebildet wird. Die Differenz zwischen dem Außendurchmesser der Welle und dem Innendurchmesser der Bohrung ist hier bei so gewählt, dass unter Miteinbeziehung der Viskosität eines den Ringspalt durchströmenden Fluids und der axialen Erstreckung des Ringspalts der Durchflusswiderstand, d.h. die Druckdifferenz zwischen der Eintrittsseite und der Austrittsseite des Spaltes so groß ist, dass der den Dichtspalt durchströmende Volumenstrom des Fluids auf einen definierten Maximalwert begrenzt wird. Hierdurch wird eine hydraulische Dichtwirkung erzielt. In der Praxis beträgt die Höhe eines ringförmigen radialen Dichtspaltes, d.h. die Differenz zwischen Außendurchmesser der Welle und Innendurchmesser der Bohrung, 0,1 bis 0,25 % des Außendurchmessers der Welle.

Auch in der radialen Bohrung 13 ist eine Blende 21 platziert, über welche, wie auch bei Blende 18 der radialen Bohrung 12, über eine Durchgangsbohrung die zum Ringkanal 15 gelangende Ölmenge definierbar ist. Somit kann auch in diesem Fall eine bedarfsgerechte Ölversorgung des Wälzlagers 11 sichergestellt werden.

Mittels der erfindungsgemäßen Ausgestaltung eines Getriebes kann eine individuelle Schmiermittelversorgung von Wälzlagern bei gleichzeitig niedrigem Herstellungsaufwand sichergestellt werden.

### Bezugszeichen

- 1: Getriebewelle
- 2: Wälzlager
- 3: Wälzlager
- 4: Wälzlager
- 5: Gehäuse
- 6: Ölzuführungskanal
- 7: Lamellenkupplung
- 8: Nabe
- 9: Nabe
- 10: Getriebewelle
- 11: Wälzlager
- 12: radiale Bohrung
- 13: radiale Bohrung
- 14: Ringkanal
- 15: Ringkanal
- 16: Kanal
- 17: Sicherungsring
- 18: Blende
- 19: Kanalsystem
- 20: Querbohrung
- 21: Blende
- 22: radialer Dichtspalt

## Patentansprüche

1. Getriebe, insbesondere Schiffsgetriebe, mit einem Gehäuse (5) und mindestens einer einen Ölzuführungskanal (6) aufweisenden Getriebewelle (1), wobei über den Ölzuführungskanal (6) eine radial zur mindestens einen Getriebewelle (1) liegende Funktionsbaugruppe mit Öl versorgbar ist, **dadurch gekennzeichnet, dass** im Bereich von mindestens einem Wälzlager (4, 11) eine je zugeordnete radiale Bohrung (12; 13) von dem Ölzuführungskanal (6) abzweigt, welche in einen je zugehörigen Ringkanal (14; 15) zur Zuführung von Öl zum mindestens einen Wälzlager (4; 11) einmündet.

2. Getriebe nach Anspruch 1, **dadurch gekennzeichnet, dass** das mindestens eine Wälzlager (4) die mindestens eine Getriebewelle (1) lagert, wobei der je zugehörige Ringkanal (14) axial benachbart zu dem mindestens einen Wälzlager (4) in einer Nabe (9) oder im Gehäuse (5) ausgebildet und über einen Kanal (16) mit dem mindestens einen Wälzlager (4) verbunden ist.

3. Getriebe nach Anspruch 1 oder 2, **dadurch gekennzeichnet, dass** das mindestens eine Wälzlager (11) eine Nabe (9) lagert, wobei der je zugehörige Ringkanal (15) radial zwischen dem mindestens einen Wälzlager (11) und der mindestens einen Getriebewelle (1) liegend ausgebildet und über ein anschließendes Kanalsystem (19) mit dem mindestens einen Wälzlager (11) verbunden ist.

4. Getriebe nach Anspruch 3, **dadurch gekennzeichnet, dass** der Ringkanal (15) in der Nabe (9) ausgebildet ist.

5. Getriebe nach Anspruch 3 oder 4, **dadurch gekennzeichnet, dass** die Nabe (9) und das Gehäuse (5) das Kanalsystem (19) zumindest bereichsweise zwischen sich ausbilden.

6. Getriebe nach einem der Ansprüche 3 bis 5, **dadurch gekennzeichnet, dass** das Kanalsystem (19) stufenartig ausgebildet ist.

7. Getriebe nach einem der vorhergehenden Ansprüche, **dadurch gekennzeichnet, dass** in der je zugeordneten radialen Bohrung (12, 13) eine Blende (18; 21) vorgesehen ist, welche über eine Durchgangsbohrung einen Öldurchfluss definiert.

8. Getriebe nach einem der vorhergehenden Ansprüche, **dadurch gekennzeichnet, dass** die Funktionsbaugruppe eine Lamellenkupplung (7) ist.

9. Getriebe nach einem der vorhergehenden Ansprüche, **dadurch gekennzeichnet, dass** zwei Wälzlager (4, 11) axial dicht beieinander angeordnet sind.

10. Getriebe nach einem der vorhergehenden Ansprüche, **dadurch gekennzeichnet, dass** das mindestens eine Wälzlager (4, 11) ein Zylinderrollenlager ist.

11. Getriebe nach einem der vorhergehenden Ansprüche, **dadurch gekennzeichnet, dass** der Innendurchmesser der Bohrung in dem Gehäuse (5) und der Außendurchmesser der Nabe (9) so gewählt sind, dass ein radialer Dichtspalt (22) gebildet wird.
